# EUROPEAN PATENT SPECIFICATION

(11) **EP 2 950 989 B1**
(45) Date of publication and mention of the grant of the patent: **11.03.2020**
(21) Application number: 13873502.2
(22) Date of filing: 31.01.2013
(51) Int. Cl.: B29D 30/06, B29D 30/52, B29C 33/44

(54) **METHOD AND APPARATUS FOR DEMOLDING A TREAD FROM A MOLD**
VERFAHREN UND VORRICHTUNG ZUM ENTFORMEN EINER LAUFFLÄCHE AUS EINER FORM
PROCÉDÉ ET DISPOSITIF POUR DÉMOULER UNE BANDE DE ROULEMENT D'UN MOULE

(43) Date of publication of application: 09.12.2015
(73) Proprietor: Compagnie Générale des Etablissements Michelin, 63000 Clermont-Ferrand (FR)
(72) Inventor: PAN, Chinglin, Greenville, SC 29605 (US); CRESS, Ronald, Greenville, SC 29605 (US); PETROVICH, Michael D., Greenville, SC 29605 (US)
(74) Representative: Casalonga
(86) International application number: PCT/US2013/024184
(87) International publication number: WO 2014/120216

(56) References cited:
- WO-A1-2008/057077
- WO-A1-2011/025499
- WO-A1-2013/136313
- US-A1- 2004 197 432
- US-A1- 2011 148 001
- US-A1- 2012 146 262

## Description

### BACKGROUND OF THE INVENTION

This invention relates generally to the demolding (*i.e*., de-molding) of tire treads, and more specifically, to the demolding of a tread comprising a strip from a mold.

### DESCRIPTION OF THE RELATED ART

The present invention relates to an apparatus according to the preamble of claim 11, such as it is, e.g., known from WO2011/025499.

Tire treads for retreaded tires are commonly formed according to a molding process. In the molding process, various void features are formed on a side of the tread intended to be the outer side or ground engaging side of the tread. Such void features may comprise grooves or sipes, for example. The mold includes projections arranged within a tread molding cavity to form the void features in the tread.

Treads for retreaded tires are commonly formed as a strip having a first end and a second end. In such instances, when demolding the tread from the mold, cracking has been found to initiate along the void features arranged within the tread. The occurrence of these cracks may initiate, or increase in severity or frequency, due to the molding of complex tread voids. Accordingly, there is a need to reduce the creation and/or propagation of cracks along void features molded into a retread tire tread.

### SUMMARY OF THE INVENTION

The present invention comprises a method in accordance with independent claim 1 and an apparatus in accordance with independent claim 11 for demolding a tread from a mold. In particular embodiments, a method of demolding a tread from a mold includes arranging one or more rollers to extend across a transverse extent of a tread molding cavity and across an outer, exposed side of a tread, the tread being at least partially arranged in a tread molding cavity of a mold, the tread molding cavity having a length extending longitudinally from a first end to a second end and including projections for forming void features in a thickness of the tread, the one or more rollers being freely-rotatable and arranged to define a demolding path of the tread extending from the mold. Such embodiments of the method further include demolding a first end of the tread from the mold, whereby a remaining portion of the tread remains within the tread molding cavity. An additional step includes arranging the tread at least partially around the one or more rollers. Finally, a further step include demolding the remaining portion of the tread from the tread molding cavity along the demolding path such that the tread is initially directed outwardly from a molded position within the tread molding cavity at an initial angle less than 90 degrees from the molded position, the tread continuing along the demolding path until the tread is directed away from the molding cavity in a direction 90 degrees from the molded position at a perpendicular position, the perpendicular position located a distance away from the molding cavity, the distance being at least equal to approximately 80% of the tread thickness, and where the tread at least partially extends around a circumference of at least one of the one or more rollers along the demolding path, where the step of demolding includes translating one of the mold or the tread relative the other to demold the tread from the mold cavity.

Further embodiments of the invention comprise an apparatus to assist in the demolding of a tread. For example, in particular embodiments, such an apparatus comprises a freely translating demolding-assistance device configured to freely translate along a tread mold, the device including a freely rotatable roller extending across a tread-receiving area within the device, the tread-receiving area configured to receive a width of a tread arranged in a tread molding cavity of a mold and form a portion of a demolding path of the tread, the tread-receiving area also is configured to extend across a transverse extent of a tread molding cavity and across an outer, exposed side of a tread.

The foregoing and other objects, features and advantages of the invention will be apparent from the following more detailed descriptions of particular embodiments of the invention, as illustrated in the accompanying drawings wherein like reference numbers represent like parts of the invention.

### BRIEF DESCRIPTION OF THE DRAWINGS

FIG. **1** is a partially sectioned side view of a prior art demolding process for removing a tread from a mold.
FIG. **2** is a partially sectioned side view of a demolding process for removing a tread from a mold according to an embodiment of the invention.
FIG. **3** is a top perspective view of a device for assisting in the demolding of a tread from a mold according to an embodiment of the invention.
FIG. **4** is a bottom view of the device shown in FIG. **3****.**
FIG. **5** is a back end view of the device shown in FIG. **3** operating along a tire tread mold in accordance with an embodiment of the invention.
FIG. **5A** is a close-up view of the area identified as **5A** in FIG. **5****.**
FIG. **6** is a top view of the device shown in FIG. **5** operating along a tire tread mold and during a demolding process where a tread is being removed from the mold in accordance with an embodiment of the invention.
FIG. **7** is a partially sectioned side view of a demolding process for removing a tread from a mold according to an alternative embodiment of the invention, where a plurality of rollers are arranged at different locations from the molding cavity to define the demolding path and provide a perpendicular position of the tread there along in lieu of a single roller as shown in FIG. **2****.**
FIG. **8** is a perspective view of a roller having a plurality of ball bearing arranged along an outer surface of the roller in accordance with a particular embodiment of the invention.

### DETAILED DESCRIPTION OF PARTICULAR EMBODIMENTS

The present invention comprises improved methods and apparatus for demolding molded treads from a mold cavity. In particular embodiments, the inventive methods and apparatus are used to demold retread tire treads comprising a strip having a length defined by a first and a second end. It is appreciated, however, that the inventive methods and apparatus may be employed to demold any strip of tread, whether for a retreaded tire or an original tire.

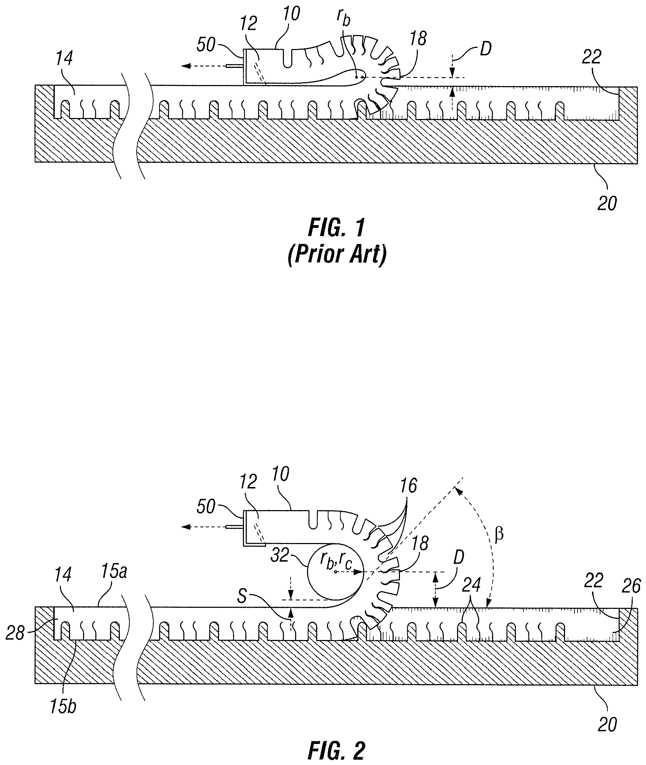

Use of the inventive methods and apparatus disclosed herein have been shown to decrease the creation and propagation of cracks initiating at a void feature within the tread by virtue of the demolding operation. Use of the inventive methods and apparatus have also been found to decrease the demolding force required to remove the tread from the mold - as much as 50-200 pounds (22.7-90.7 kg), which can reduce stress and the ultimate failure of other demolding components. These benefits have been achieved at least in part by altering the angle by which the tread is effectively removed from the mold. With reference to FIG. **1**, in prior art demolding procedures, a first end **12** of the tread **10** is pulled towards the second end **14** of the tread remaining within the mold **20** (that is, the portion of the tread not yet demolded). In such instances, the tread **10** is tightly folded such that as the tread is being immediately pulled back towards the second end of the tread and overtop a portion of the tread remaining within the mold. In doing so, the tread is severely bent and deformed as it is being withdrawn from the mold, which in turn causes notable stresses facilitating crack initiation and propagation along portions of any void feature within the tread. In such instances, in can be said that the fold of the tread has a bending radius **r**_{b}, but which is effectively very small, such as 5 to 10 millimeters or less. Furthermore, there is good reason to refrain from removing the initially demolded tread from a demolding device for the purpose of winding the tread through a demolding-assistance device, which requires additional time and effort which further increases the process time for demolding treads. For the same reason, there is good reason to continue using the same demolding device after initially demolding a first end of the tread - instead of using a demolding-assistance device having driven rollers, which may conflict with the demolding device.

Embodiments of the present invention include methods of demolding a tread from a mold. Particular embodiments of such methods may include a step of arranging one or more rollers to extend across a transverse extent of a tread molding cavity and across an outer, exposed side of a tread, the tread being at least partially arranged in a tread molding cavity of a mold, the tread molding cavity having a length extending longitudinally from a first end to a second end and including projections for forming void features in a thickness of the tread, the one or more rollers being freely-rotatable and arranged to define a demolding path of the tread extending from the mold.

Generally, the tread comprises a strip having a length extending lengthwise or longitudinally between a first end and a second end, and a width extending transverse to the lengthwise direction of the tread. The tread also has a thickness bounded by an outer, ground-engaging side of the tread and a bottom side of the tread configured for attachment to a tire carcass. The outer, ground-engaging side is configured to engage any surface upon which a tire may operate, which is referred to generally as a ground surface. The outer, ground-engaging side of the tread may include various void features to enhance tire performance as it operates along a ground surface. Void features may comprise, for example, grooves or sipes. Sipes can be described as forming narrow grooves. The tread may comprise any tread, whether a tread for retreading a tire or for an original tire, and may be formed of elastomeric material, such as any natural or synthetic rubber that may be vulcanized with the addition of heat according to a curing process.

While the tread length may equal a circumferential length of an annular tread arranged around a tire, in particular embodiments, the tread length includes an additional length forming a handling portion referred to as a tongue. The tongue is used to assist in demolding of the tread, whereby the tread is first engaged and pulled from the mold to initiate demolding of the tread from the mold. For example, in particular embodiments, a demolding device embodying the demolding apparatus disclosed in published International Patent Application No. WO 2008-057077A1 may be employed to demold the tread from the mold using such a tongue formed at an end of the tread. Once demolded, the tongue portion is removed from the tread length.

With regard now to the mold, the mold includes a tread molding cavity within which the tread is formed. Although any mold may be employed by the present invention and the methods described herein, in particular embodiments, the mold generally comprises a first mold member and a second mold member, each of the mold members being operable articulated between a mold open and a mold closed arrangement to form a cavity for molding the tread. In particular embodiments, the first and second mold members comprise top and bottom mold members, respectively. It is understood that each of the first and second mold members may include a mold cavity, where the one or more cavities together form the cavity in which the tread is molded. For example, the full length and width of the tread may be formed in a first and in a second mold member of a mold, where each of the top and bottom members include a mold cavity for forming a portion of the tread thickness. In another example, the tread thickness is formed in one of the first and second mold members, whereby the other of the mold members closes or seals the cavity. In the example shown in FIG. **2**, the tread thickness is formed in a bottom member, while a platen or plate (not shown) comprising a top mold member is arranged overtop the molding cavity to close or seal the mold cavity such that the thickness of the tread is formed in the bottom mold portion.

Furthermore, the tread molding cavity has a length extending longitudinally from a first end to a second end and a width extending laterally in a direction perpendicular to the lengthwise direction of the cavity. The tread molding cavity also has a thickness or depth, which may include projections for forming void features in a thickness of the tread. While the projections may be formed along the outer, ground-engaging side of the tread, void features may also be formed along the bottom side of the tread, such as when recessed voids are desired that which may become exposed to the ground-engaging side of the tread during the tread's useful life. It is also understood that the mold may be what is often termed as a flat mold, which is a mold where the tread molding cavity is generally planar - that is, where the length and the width generally extend in linear directions perpendicular to one another. For example, flat molds may have a tread molding cavity where the outer, ground-engaging side and/or the bottom side extend along a plane. Of course, the methods may employ any type of mold where the tread molding cavity has a first end associated with a first end of the tread and a second end associated with a second end of the tread to form a tread comprising a strip. For example, a non-flat mold may comprise a mold where the thickness of the tread molding cavity (as defined by the cavity sides associated with each of the outer, ground-engaging side and the bottom side) generally extends along a non-linear path (where the thickness of the tread molding cavity of the flat mold generally extends along a linear path).

To alter the local demolding direction of the tread from the mold and thereby avoid any crack initiation or propagation issues that may arise when the tread is folded or bent too tightly as it is being removed from the mold, a demolding path is provided that more gradually removes the tread from the mold. This is achieved by pulling the tread out of the mold cavity without too tightly folding or bending the tread. To achieve this, a demolding path is configured to avoid any tight bend or fold at least at or near the molding cavity.

To facilitate demolding of the tread from the molding cavity and formation of a demolding path, one or more rollers are arranged to extend at least partially across a transverse extent of the tread molding cavity, such as an opening thereof, and across the outer, exposed side of a tread, the tread being at least partially arranged in a tread molding cavity of a mold. The transverse extend of the tread molding cavity extends in a direction generally perpendicular to the depth of the molding cavity, and may comprise a width, length, or any extent extending in any direction between the width or length of the tread molding cavity or the opening thereof. Furthermore, the one or more rollers extend across a transverse extent of the outer, exposed side of the tread, which extends generally in a direction perpendicular to the thickness of the tread, and may comprise a width, length, or any extent extending in any direction between the width and length of the outer, exposed side of the tread. In particular embodiments, the outer, exposed side of the tread is a ground-engaging side of the tread, although, it is understood that the outer, exposed side may form the bottom side of the tread (such as when the ground-engaging side of the tread remains engaged with a molding surface forming the molding cavity within the mold.

With further regard to the one or more rollers, the outer diameter of each of the one or more rollers also defines a tread-engaging outer surface of each corresponding roller. The tread-engaging outer surface generally extends circumferentially around (that is, extends about a circumference of) the roller and in an axial direction relative a rotational axis of any roller. In either direction, the tread-engaging outer surface may extend continuously or discontinuously. In particular embodiments, the tread-engaging outer surface of any roller is cylindrical. In such instances, it can be said a length of the tread-engaging outer surface is generally defined by a constant radius of curvature or outer diameter relative a rotational axis of the roller, even though the surface may be texturized. In other embodiments, the tread-engaging outer surface is defined by a variable radius or diameter. For example, over the length of the tread-engaging outer surface, the tread-engaging outer surface may increase or decrease in radius or diameter as the tread-engaging outer surface extends lengthwise form a longitudinal centerline of the tread-engaging outer surface or of any roller.

It is understood that the tread-engaging outer surface may comprise a low or high fiction surface. Accordingly, the tread-engaging outer surface may be generally smooth or texturized, or even coated with any desired coating to increase or decrease friction between the tread and roller - regardless of whether the outer surface is smooth or texturized. A high friction tread-engaging outer surface may increase the friction between any roller and tread to better control the tread as it is being demolded, while a low friction surface may increase the ability of any roller to move along the tread as it is being demolded.

It is further noted that each of the one or more rollers are freely-rotatable and arranged to define a demolding path of the tread extending from the mold. It is understood that each such roller has a rotational axis extending longitudinally through the roller. Freely rotatable means that each such roller, when in a rotatable or unlocked configuration, is free to rotate as the tread is translates along the roller except for any frictional resistance that may arise along the rotational axis - such as along a shaft or bearing forming the rotational axis. Furthermore, when in a freely rotatable configuration, each of the rollers are not driven directly by a motor, engine, or any other driving source by direct connection or directly by any transmission member in operable communication with such driving source. A transmission member comprises any member configured to transfer driving power directly from a driving source to a driven member (that is, the roller). A transmission member may comprise, for example, a chain, belt, or gear.

It also noted that for each roller arranged at a particular location along the demolding path away from the molding cavity, the roller may comprise a single roller generally or substantially extending across a transverse extent of a tread molding cavity and across an outer, exposed side of a tread. It is also understood that for each roller arranged at a particular location along the demolding path away from the molding cavity, the roller may be one of a plurality of rollers arranged to generally or substantially extend collectively or in combination across a transverse extent of a tread molding cavity and across an outer, exposed side of a tread. For example, a series of rollers may be arranged co-axially, so to in effect operate along a single rotational axis, which may also be described as in effect forming a single segmented roller. In such instances, the plurality of rollers may comprise rollers having the same outer diameters or different outer diameters, which may in effect represent a variable diameter single roller.

In arranging one or more rollers to define a demolding path, the demolding path is configured such that the tread is initially directed outwardly from a molded position within the tread molding cavity at an initial angle less than 90 degrees from (or relative to) the molded position, the tread continuing along the demolding path until the tread is directed away from the molding cavity in a direction 90 degrees from the molded position at a perpendicular position, the perpendicular position located a distance away from the molding cavity. In the perpendicular position, a cross-section of the tread - taken along a plane extending through tread thickness and normal to the lengthwise and widthwise directions of the tread - is arranged perpendicular to the molded position of the tread and a lengthwise or widthwise direction of the molding cavity. It is understood that a single roller or a plurality of rollers may be arranged at different locations along the demolding path to define the portion of the demolding path extending between the molding cavity and the perpendicular position. The bending radius, therefore, may be defined by the radius of curvature or outer diameter of a roller when a single roller is used to form the demolding path between the molding cavity and the perpendicular position at a transverse location across the tread or molding cavity.

After reaching the perpendicular position, the demolding path may direct the tread in any desired direction. In particular embodiments, the demolding path directs the tread in a direction greater than 90 degrees relative the molded position in the molding cavity after reaching the perpendicular position. In doing so, according to particular embodiments, a fold is formed in the tread at the perpendicular position as a first end of the tread is directed away from the first end of the molding cavity and towards the second end of the molding cavity and the second end of the tread. It is understood that a single roller or a plurality of rollers may be arranged at different locations along the demolding path to form this bend or fold, the bend or fold having a bending radius comprising the radius of curvature discussed above. The bending radius, therefore, may be defined by the outer diameter of any single roller discussed above when a single roller is used to form the demolding path between the molding cavity and the perpendicular position at a transverse location across the tread or molding cavity.

To provide a more gradual demolding path and further avoid initiating or propagating cracks within the tread, in the demolding path described above, the perpendicular position is located a distance away from the molding cavity. In particular embodiments, the distance is equal to approximately 80% of the tread thickness. In other embodiments, the distance by which the perpendicular position is located from the molding cavity is equal to or greater than 100%, 150%, 160%, 200%, 240%, or 260% of the tread thickness. In more specific embodiments, the distance is equal to or greater than 20 mm, 25 mm, 40 mm, 50 mm, 60 mm, or 63 mm. It is understood that this distance may be increased when the perpendicular position is arranged adjacent to a roller about which the tread navigates at the perpendicular position (where the bending radius is generally equal to the radius of curvature of the outer surface of the roller) and the roller is spaced a distance from the molding cavity. As noted above, the portion of the demolding path extending from the mold cavity and to the perpendicular position may be achieved by employing one or more rollers arranged at different locations along the demolding path away from the molding cavity.

As stated above, a single roller may be arranged at different locations along the demolding path to define the portion of the demolding path extending between the molding cavity and the perpendicular position. Accordingly, in particular embodiments, the single roller has a radius of curvature sufficiently sized to alter the demolding direction of the tread as it is being removed from the mold and increase the bending radius of the tread being removed from the mold to thereby avoid the initiation and/or propagation of cracks in the tread. To achieve this purpose, generally, the radius of curvature may be as large as possible, although it is understood that clearance (also referred to as "see through" or "daylight") between components of the mold providing access to a molding cavity may limit the size of the roller employed. Such mold components may comprise, for example, opposing molding members, such as top and bottom molding members.

When arranging a single roller to define the portion of the demolding path extending between the mold cavity and the perpendicular position, at a transverse location along the transverse extent of the tread or of the molding cavity, the single roller has a radius of curvature equal to or greater than 10 millimeters (mm). In other embodiments, the radius of curvature is equal to or greater than 12.5 mm, 20 mm, 25 mm, 30 mm, or 31.5 mm. It can also be said, more generally, that the radius of curvature is equal to or greater than 40% of the tread thickness. In other embodiments, the radius of curvature is equal to or greater than 50%, 80%, 100%, 120%, or 140% of the tread thickness. The radius of curvature can also be referred to as, or define, a bending radius of the tread when the tread is bent or folded along at least a portion of the roller. The roller can also be described as having an outer diameter, which is, in particular embodiments, equal to twice the radius of curvature. In such instances, particular embodiments of the roller have an outer diameter equal to or greater than 80% of the tread thickness. In other embodiments, the roller outer diameter is equal to or greater than 100%, 150%, 160%, 200%, 240%, or 260% of the tread thickness. In other, more specific embodiments, the outer diameter of the roller is equal to or greater than 20 mm, 25 mm, 40 mm, 50, mm, 60 mm, or 63 mm. While it is understood that a roller may have a variable outer diameter or radius of curvature around a circumference and/or along a length or rotational axis of the roller, the sizes specifically discussed above refer to portions of the roller along which the tread engages or navigates.

As discussed above, a plurality of rollers may be arranged to form the portion of the demolding path between the molding cavity and the perpendicular position. For example, the plurality of rollers may be arranged to generally replicate a portion of a demolding path defined by a single roller. In this alternative embodiment, the rollers are spaced apart along the demolding path and a length of any demolded tread portion to define a demolding path described above, that in effect reduces the demolding stress imparted on the tread by the mold. The rotational axes of the plurality of rollers are parallel in particular embodiments, although it is understood that the rotational axes of one or more of the plurality of rollers may be biased relative each other and an otherwise parallel arrangement.

In particular embodiments, the step of arranging one or more rollers to extend transversely across a mold cavity and tread includes arranging the one or more rollers in close proximity to the tread molding cavity. By locating each of the one or more rollers in close proximity to the tread molding cavity, or, the tread contained in the tread molding cavity at the point of tread removal, the one or more rollers are better able to alter the path or direction of tread removal by virtue of each roller's outer diameter. While the one or more rollers may be arranged to contact the mold in arranging the rollers in close proximity, in particular embodiments, arranging any roller in close proximity to the tread molding cavity forms a spacing or gap between the roller and the tread molding cavity. For example, in particular embodiments, the spacing is equal to or greater than 1 mm or equal to or greater than 2 mm, and can range between 1 and 10 mm in certain instances, although the spacing could be greater if there is sufficient space between open mold components. In further embodiments, arranging the roller in close proximity to the tread molding cavity places the roller in contact with the tread arranged within the tread molding cavity. In effect, this may increase the distance from which the perpendicular position of a tread along the demolding path is located from the molding cavity by the spacing distance.

Particular embodiments of such methods of demolding may include a step of demolding a first end of the tread from the mold, whereby a remaining portion of the tread remains within the tread molding cavity. Demolding of the tread includes applying a demolding force to extract the tread from the mold, and more specifically the tread molding cavity. Accordingly, the step of demolding a first end of the tread, as well as the later step of demolding a remaining portion of the tread, may be performed by any desired demolding method or device, whether automatic or non-automatic, including, for example, by employing the automatic demolding method and/or automatic demolding device disclosed in published International Patent Application No. WO 2008/057077A1. Furthermore, the first end may be demolded manually, while the step of demolding the remaining portion of the tread utilizes a demolding device. Once the first end of the tread is demolded, or even before the demolding the first end, the one or more rollers may be arranged to extend across a transverse extent of the tread molding cavity and across an outer, exposed side of the tread.

Particular embodiments of such methods of demolding may include a step of arranging the tread at least partially around the one or more rollers. This step may be performed in conjunction with the step of demolding initially a first end of the tread, or may be performed after the step of initially demolding yet prior to the step of demolding the remaining portion of the tread. Accordingly, the tread may be arranged or wrapped around one or more rollers as (that is, concurrently while) the first end of the tread is being demolded, or after the first end of the tread has been demolded, such as when, for example, a fold is formed along the tread length and the one or more rollers is subsequently arranged within the fold, that is, between the folded portions of the tread. Therefore, the step of arranging the tread at least partially around the one or more rollers may occur concurrently with, and by virtue of, performing the step of demolding a first end of the tread and/or with the step of arranging one or more rollers to extend across a transverse extent. As taught herein, each of the one or more rollers may be arranged within a demolding-assistance device arranged to freely translate in a demolding direction along a molding cavity. Furthermore, this step of wrapping, as well as the steps of initially demolding and inserting may be performed manually or automatically. Accordingly, in particular embodiments, the step of demolding a first end of the tread from the tread molding cavity is performed automatically using an automatic demolding device, and where the step of arranging one or more rollers is performed while the tread remains engaged with the automatic demolding device. In particular embodiments, such as when employing such a demolding-assistance device, for example, each of the one or more rollers are operably moved from a tread-receiving position to a demolding position after performing the step of arranging the tread at least partially around the one or more rollers. The same may occur for the tread guide members, discussed further herein to maintain the tread in close relation to the demolding path. Accordingly, in particular embodiments, the steps of arranging the tread at least partially around the one or more rollers and arranging one or more rollers to extend across a transverse extent of a tread molding cavity are each performed by operably moving each of the one or more from a tread-receiving position to a demolding position after performing the step of demolding a first end of the tread. In performing this step of arranging the tread at least partially around the one or more rollers, the tread at least partially extends around a circumference of at least one of the one or more rollers along the demolding path.

Further embodiments of such methods may include a step of demolding the tread from the tread molding cavity along the demolding path such that the tread is initially directed outwardly from a molded position within the tread molding cavity at an initial angle less than 90 degrees from the molded position, the tread continuing along the demolding path until the tread is directed away from the molding cavity in a direction 90 degrees from the molded position at a perpendicular position, the perpendicular position located a distance away from the molding cavity, the distance being equal to approximately 80% of the tread thickness, and where the tread at least partially extends around a circumference of at least one of the one or more rollers along the demolding path, where the step of demolding includes translating one of the mold or the tread relative the other to demold the tread from the mold cavity. This step of demolding may performed in accordance with different embodiments, whereby the tread is demolded along a demolding path described above in different embodiments. Therefore, for example, the step of demolding may translate a tread along a demolding path where the perpendicular position is located a particular distance as described above in association with different embodiments of the demolding path.

As also stated above, demolding of the tread includes applying a demolding force to extract the tread from the mold, and more specifically the tread molding cavity. Accordingly, application of a demolding force may be achieved by translating the tread relative the mold. For example, the tread may be demolded by forcefully translating the tread relative a stationary mold or by translating the mold while a portion of the tread remains fixed or is translated away from the mold.

It is understood that demolding may be performed manually or by using any mechanical device or machine, which may perform the step of demolding automatically, whether partially or completely. For example, an automatic demolding machine may be used to perform the step of demolding, which may be performed continuously or may be interrupted to achieve certain steps of these methods. In more particular instances, an automatic demolding machine may be interrupted to perform the step of arranging one or more rollers to extend transversely across a tread. For example, a demolding device embodying the invention disclosed in published International Patent Application No. WO 2008/057077A1 may be employed. It is understood that any other device or tool may be used to pull, push, or lift at least a portion of the tread from the molding cavity. Of course, any other device or tool may be used to demold any portion of the tread.

As stated above, in particular embodiments, the first end of the tread is initially demolded prior to performing the step of demolding the tread and, in yet further embodiments, prior to performing the step of the step of arranging the roller to extend across a width of the tread. After the first end of the tread is demolded, but prior to arranging the one or more rollers across the tread, a fold having a bending radius may be formed between the demolded portion of the tread and a portion of the tread remaining within the mold, where a portion of the demolded portion is arranged overtop a portion of the tread remaining within the mold. In certain instances, as necessary, the demolding may be optionally paused and the demolded portion reversed so to increase the bending radius of the fold and reduce the tension on the tread, which may better facilitate arrangement of the one or more rollers transversely across the tread. Accordingly, after a first end of the tread has been demolded yet before demolding the tread, particular embodiments of such methods may include the step of first forming a bend or fold in the tread, and subsequently inserting the one or more rollers within the fold or along the bend. This may include placing the one or more rollers into engagement with the tread, or subsequently, after arrangement of the one or more rollers has been achieved, tightening the bend or fold until the tread engages the one or more rollers.

In particular embodiments, to improve the ease in which each of the one or more rollers are transversely inserted between folded portions of the tread, the one or more rollers include a plurality of freely rotating ball bearings arranged along an outer surface associated with an outer circumference of the roller. This is because the freely-rotating ball bearings in multiple directions to allow the roller to translate across a transverse direction of the tread, such as across the tread width, as the roller is being inserted into the fold and to allow the tread to translate around a portion of the roller and the demolding path during tread demolding operations.

Particular embodiments of the step of demolding includes directing the first end of the tread away from the first end of the tread demolding cavity after the tread continues along the demolding path from the perpendicular position. It is understood, as discussed above, the demolding path may continue in any direction after reaching the perpendicular position.

Particular embodiments of such methods may further include a step of translating one of the mold or the one or more rollers relative the other as the tread is being demolded during the step of demolding. In demolding the tread, the location at which the tread is being removed from the tread molding cavity (also referred to herein as "the tread demolding location") changes its position along the mold as tread removal continues. Therefore, it may be desirous for the one or more rollers to move with the tread demolding location so to maintain the one or more rollers in a particular position relative the tread demolding location as the step of demolding continues. In particular embodiments, the roller forms a component of a device that translates along and overtop the mold in the step of translating as the tread is demolded in the step of demolding the tread.

Particular embodiments of such methods may include the step of maintaining the tread in close relation to the roller during the step of demolding to generally maintain the tread along the demolding path during the step of demolding. As a tread is being demolded, portions of the tread may not remain in contact with the roller, and instead may separate from the roller and therefore deviate from the demolding path. This deviation arises due to the tread behaving elastically in response to the manner in which the tread is selectively released by the mold while under tension with the concurrent application of demolding forces. In particular, for example, transverse portions of the tread, such as portions of a tread width, demold more slowly from more complex portions of the mold cavity than do portions demolding from less complex portions to provide a non-uniform (that is, variable) rate of demolding across a transverse direction of the tread. More complex portions of the mold include a heightened quantity of projections for forming sipes and/or grooves. In effect, such as when the roller forms a component of a tread demolding-assistance device, this variable rate of demolding may cause the device to vibrate or jam as the tread deviates from the demolding path. Furthermore, because the tread demolding-assistance device is freely translatable, there may be a tendency for a tread folded about a freely rotatable roller to pinch the roller and thereby force the roller away from the fold and in effect cause the tread to deviate from the demolding path intended to navigate about a portion of the roller circumference. Accordingly, in particular embodiments, the step of maintaining includes maintaining the tread generally along the demolding path across the transverse extent of the outer, exposed side of the tread.

In particular embodiments, this step of maintaining may be achieved by arranging one or more guide members a distance away from the demolding path, whereby the tread is configured to translate along the demolding path arranged between the roller and the one or more guide members. As a result, when the tread deviates from the demolding path, the tread contacts one or more guide members to maintain the tread in close relation to the intended demolding path. In doing so, the tread is generally maintained along the demolding path. Each of the guide members may comprise any surface or structure to engage and thereby limit or resist further deviation of the tread from the demolding path, whereby the tread may slide along or with the guide member. In specific embodiments, each of the guide members comprise freely-rotatable members, allowing the tread to continue translating along the demolding path with limited resistance.

Each freely-rotating member may comprise any rotatable member, such as a spindle, shaft, bearing, roller, or any other member having an outer surface configured to freely-rotate with translation of the tread and thereby facilitate translation of the tread as the portion of the tread separating from the roller operably engages the rotating member. Each rotating member may be arranged in any desired configuration relative the tread and mold. For example, in particular embodiments, each rotating member has a rotational axis parallel arranged to a rotational axis of the roller.

It is understood that a single guide member may extend across much of, if not all of, the transverse extent of the outer, exposed side of the tread, and therefore, the molding cavity. It is also understood that one or more guide members may be arranged at particular locations across the transverse extend of the outer, exposed side of the tread, and therefore, the molding cavity. For example, in particular embodiments, where the lateral sides of a transverse extend of the tread, such as the lateral sides of the tread width, demold easier than more central portions of the transverse extend of the tread, one or more guide members may be arranged on opposing lateral sides of the central portion to maintain the lateral sides of the tread generally along the demolding path in close relation to the roller. Accordingly, the step of maintaining may comprise maintaining lateral portions of the tread width generally along the demolding path in close relation to the roller. Furthermore, in more specific embodiments, the step of maintaining is achieved by arranging one or more freely-rotating guide members along each lateral side of the tread width.

Such methods will now be discussed in accordance with particular exemplary embodiments and in conjunction with the figures.

With reference to FIG. **2**, the present invention is exemplified in accordance with a particular embodiment. In the figure, a tread **10** is shown being demolded using a demolding device **50** after a first end of the tread has been demolded from the tread molding cavity according to particular embodiments of the methods discussed above. As mentioned above, demolding device may comprise any known demolding device, such as the device described in published International Patent Application No. WO 2008-057077A1. In particular, the tread is being demolded along a demolding path, where one or more freely-rotatable rollers **32** are arranged to define the demolding path such that the tread is initially directed outwardly from a molded position within the tread molding cavity **22** at an initial angle **β** less than 90 degrees from the molded position, the tread continuing along the demolding path until the tread is directed away from the molding cavity in a direction 90 degrees from the molded position at a perpendicular position **18**, the perpendicular position located a distance **D** away from the molding cavity, the distance being equal to at least approximately 80% of the tread thickness.

In particular, with continued reference to FIG. **2**, the tread shown has a thickness **T** bounded by an outer, exposed side **15a** and an interior, contained side **15b.** In the present embodiment, the outer, exposed side **15a** is a ground-engaging side of the tread configured for engaging a ground surface during tire operation, while the interior, contained side **15b** of the tread is a bottom side of the tread configured for attachment to a tire carcass. The ground-engaging side **15a** includes a plurality of void features **16** comprising grooves and sipes. A first end **12** of the tread is shown to have already been demolded from a molded position in a first end **26** of a tread molding cavity **22** and arranged along a demolding path, where the tread is wrapped around a portion of roller **32** to form a fold **19** at the perpendicular position **18** and subsequently directed towards a second end **14** of the tread contained within a second end **28** of the tread molding cavity. It is noted that the bending radius **r**_{b} of the tread may be approximately equal to the radius of curvature **r**_{c} of the roller **32**, or, in other words one-half the roller outer diameter, when a single roller is arranged along a transverse extent of the tread or molding cavity to form a demolding path. A mold comprising a mold member **20** includes the tread molding cavity **22** having a plurality of projections **24** for forming void features **16** within the tread. A spacing **S** is shown to exist between the roller **32** and the mold member **20** and the molding cavity **22** within which a non-demolded portion of the tread remains. The spacing **S** may comprise any distance. For example, the spacing **S** may comprise any distance equal to or greater than 1 mm, for example. It is also understood, that, in other embodiments, no spacing may exist between the roller and the mold member or the portion of the tread remaining within the mold.

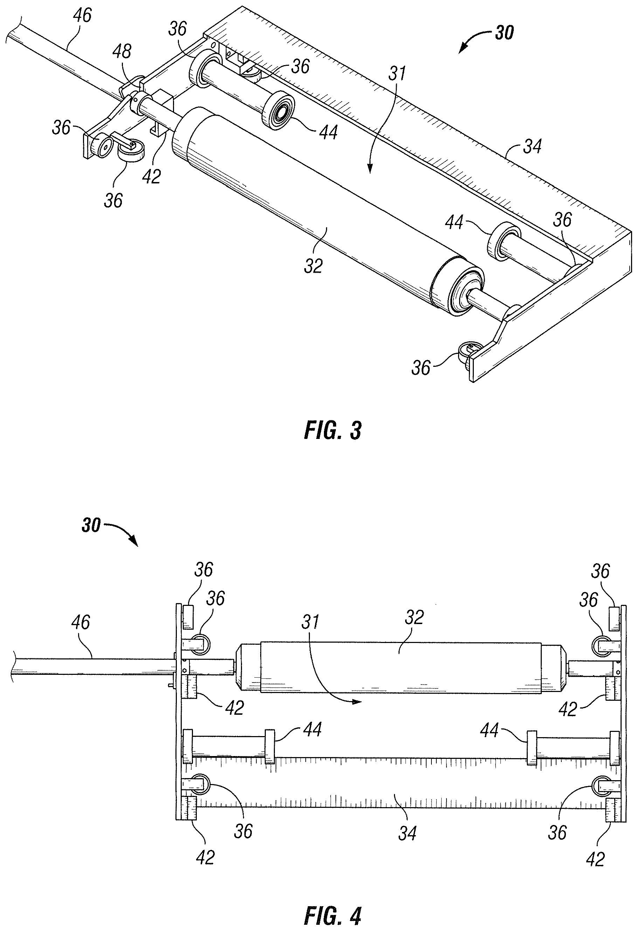

With reference to FIGS. **3-6**, an apparatus for demolding a tread is shown in accordance with an exemplary embodiment for practicing the methods discussed above and the more general device shown FIG. **2****.** In the embodiment shown, the apparatus comprises a tread demolding-assistance device **30** arranged above a mold member **20** and configured to translate in a lengthwise direction along a length of the mold member. The device **30** includes a roller **32** extending generally across a transverse extent of the tread comprising the width **W₁₀** of a tread arranged in a tread molding cavity **22** of a mold member **20.** Accordingly, the roller **32** also generally extends across a transverse extend of the outer, exposed side **15a** of the tread and across a transverse extent of the molding cavity **22**, which comprises a width of the molding cavity in the embodiment shown. The tread molding cavity **22** extends longitudinally from a first end **26** to a second end **28**, and includes projections **24** for forming void features in a thickness **T** of the tread.

The device **30** also includes a frame **34** to which the roller **32** is rotatably attached. The frame **34** includes one or more translation members **36** attached to the frame to facilitate translation of the device **30** along a length of the tread molding cavity. The translation members may comprise any known device for facilitating translation of the device relative the tread molding cavity, which are freely rotatable to provide a freely-translatable device. For example, each of the translation members may comprise a slide surface, which may comprise a low friction surface formed by a low friction material or coating. By further example, each of the one or more translation members comprise a freely rotatable member operably attached to the frame to facilitate translation of the device along a length of the tread molding device.

With reference to the embodiment shown in FIGS. **3-6**, the one or more translation members **36** each comprise a rotatable member forming a wheel or cam follower. In such example, each translation member **36** is freely rotatable. In further examples, each of the one or more translation members **36** are arranged in operable engagement with a guide rail **38** extending in a lengthwise direction of the mold. In such embodiments, each of the wheels or cam followers **36** be arranged to roll along one of a top surface **39a** and a side surface **39b** of one of a pair of guide rails **38** arranged along opposing sides of the tread molding cavity **22.** Because the wheels or cam followers **36** are arranged to roll along each of the top and side surfaces **39a**, **39b** of the rail **38**, the device is constrained in two directions. In the alternative, wheels may include one or more grooves formed along an outer, annular surface upon which each wheel rolls, where the one or more grooves operate along the top side of the rail that also includes a protrusion for extending into any groove of a wheel in an effort to constrain the device in two directions. It is understood that any other means for constraining the device in two or more directions may be employed. It is also understood, by further example, that the one or more translation members may comprise a belted or segmented conveyor or a rack and pinion of any known design.

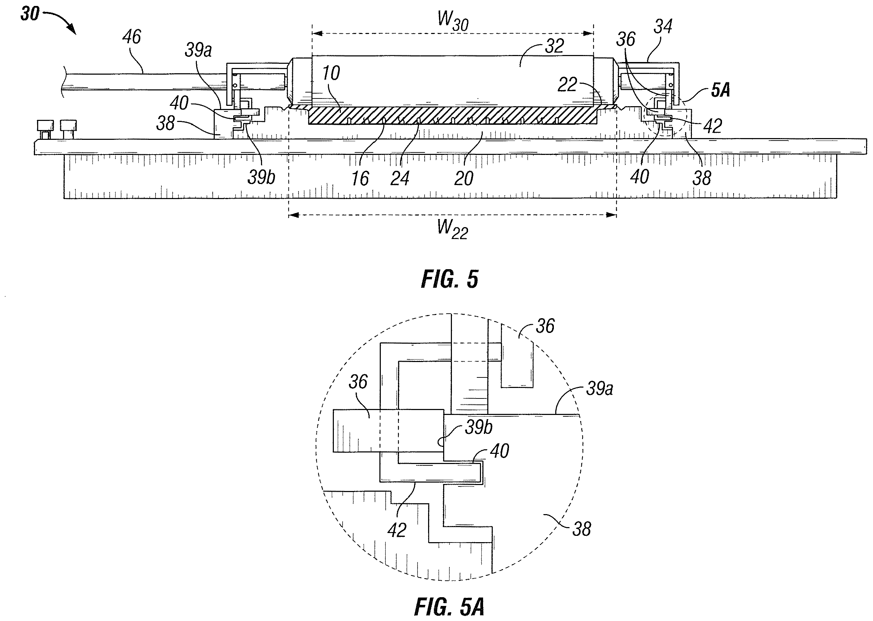

To further secure the device to the guide rail, one or more rail-engaging projections extend from the frame and are arranged to be inserted into a slot or groove, where the rail-engaging projection is configured to slide within the slots of the frame as the device translates along the rails. With reference to FIGS. **3-6**, two rail-engaging projections **42** are arranged along each lateral side of the frame **34** to engage a slot **40** contained in each of the guide rails **38.** It is understood that each rail may contain one or more slots. This is more clearly shown in FIG. **5A****.**

To assist in maintaining the demolded tread close to the bending radius as the tread navigates the roller, one or more guide members are operably attached to the frame. The one or more guide members are spaced from the roller to provide an area through which the tread passes as it is removed from the mold. With reference to FIGS. **3-6**, a pair of guide members **44** comprising rotatable members are operably attached to the frame **34** and spaced a distance **D₄₄** from the roller **32** to define a tread-receiving area **31** through which the tread **10** passes between the rotatable members and the roller as the tread navigates along the roller. Furthermore, distance **D₄₄** may be selected to place each rotatable member in constant contact with the tread - where distance **D₄₄** equals the thickness **T** of the tread. In the alternative, distance **D₄₄** may be selected to be greater than the thickness of the tread and thereby provide a desired spacing **S₄₄**, which generally maintains the tread along a demolding path around a portion of the circumference of the roller. Generally maintaining the tread along the demolding path provides an allowable deviation of the tread from the roller. For example, in embodiments where the tread thickness **T** is equal to approximately 25 mm, the spacing **S₄₄** may be equal to or greater than 15 mm, but not greater than 40 mm. In more specific embodiments, spacing **S₄₄** equals approximately 32 mm. Therefore, in particular embodiments, spacing **S₄₄** may be at least equal to the tread thickness **T** or at least equal to 60% of the tread thickness **T** but not greater than 128%, 130%, or 160% of the tread thickness **T**.

It is also noted that, in similar fashion to the one or more rollers, the guide members may be movable between a demolding position, where is arranged along a desired demolding path, and a tread-receiving position, where one or all of the guide members are displaced from the demolding position to provide sufficient clearance for the demolding-assistance device to receive the tread and arranged the tread in the tread-receiving area of the device. Accordingly, the guide members may be operably attached to the demolding-assistance device to allow such guide members to navigate between demolding and tread-receiving positions. With reference to FIGS. **3-6**, the guide members are shown in a demolding position, configuration, or arrangement.

When demolding more difficult treads, which typically have more complex features, such as a plurality of sipes (which are very narrow grooves forming slit-like discontinuities within the tread) and laterally groove extending at angles biased relative to a lateral direction of the tread. If the spacing is too small, the tread may bind in the demolding device as more complex features of the demold slower than other portions of the tread causing an unequal or variable rate of demolding across the tread width. On the other hand, if the spacing is too large, the rotatable member loses its effectiveness. Accordingly, it is possible to provide different rotatable members at different locations across a width of a tread since different portions of the tread may demold at different rates, which may cause the more easily demolded portions to deviate further from the roller than the other portions more difficultly demolded, which remain under higher tension than the more easily demolded portions. Different rotatable members are distinguished by having different outer diameters. For example, when the center portion of the tread demolds more difficultly than the lateral sides of the tread width, a larger rotatable member (or no rotatable member, which is shown in FIGS. **3-6**) is arranged in the central portion of the tread while one or more rotatable member of smaller diameters are arranged to each lateral side of the central portion of the tread width.

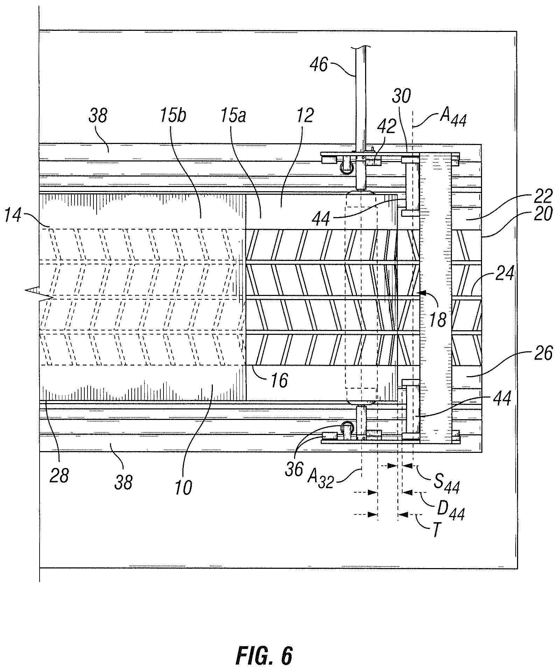

It is also noted that the location of each rotatable member may be adjustable relative roller **32** along the frame **34.** In the embodiment shown, the rotatable members are arranged such that a rotatable axis **A₄₄** of each of the pair of rotatable members is substantially parallel with a rotatable axis **A₃₂** of the roller and such that the pair of rotatable members are aligned opposite along a common rotational axis (that is, where the rotational axis of each rotatable member is coaxial with the other). This is best shown in FIG. **6****.**

As discussed herein, in particular embodiments, each of the one or more rollers are operably movable between a demolding position and tread-receiving position. With further reference to FIGS. **3-6**, roller **32** is shown in a demolding position, where the tread is arranged within a tread-receiving area **31.** To facilitate displacement of the roller **32** in the embodiment shown, a handle **46** (more generally referred to as a grasping member) is shown to be operably connected to roller **32**, such that the roller may be selectively pivoted or removed from its operational position, which may more easily facilitate installation of the device and roller along the mold and, more notably, facilitate insertion of the roller between a demolded portion of the tread and the portion of the tread remaining within the mold at location **18** where the tread is bent or folded. In particular, an aperture **48** is arranged in the frame **34** for receiving the handle or roller to place roller in operational position within the frame for demolding operations. This may be done after the roller has been inserted between the folded tread portions according to the methods described above, which can be performed manually or automatically.

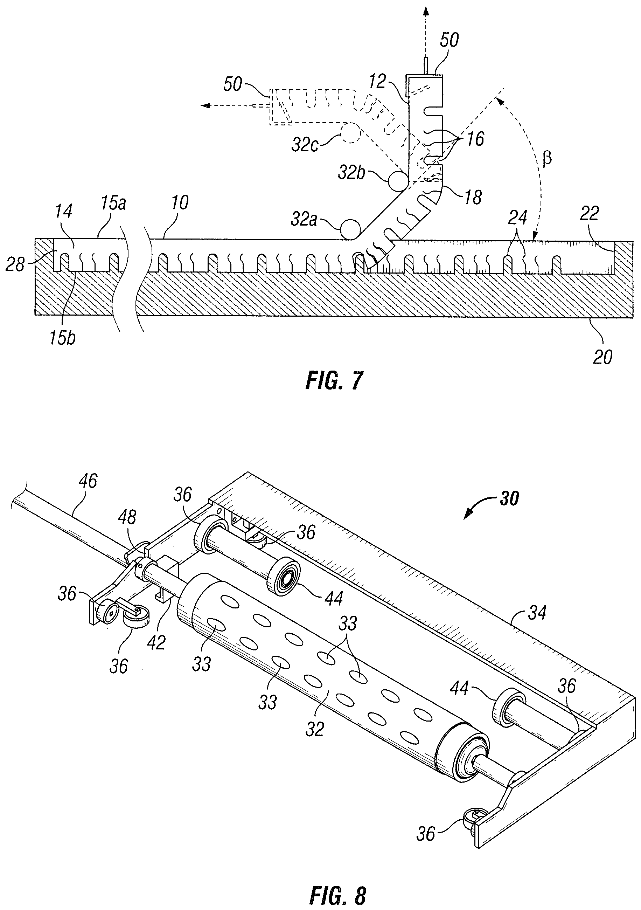

It is understood that other configurations may be employed to provide a pivotable, displacable, removable , or otherwise movable roller **32.** For example, the roller may include a latch or other fixing member, that allows the roller to be secured into an operable arrangement within the device, such as into an operable arrangement along a tread demolding path or into a tread fold or removal prior to insertion into a tread. The latch may the be released to allow the roller to be removed as desired. In further embodiments, with reference to FIG. **8**, one or more bearings **33** are arranged along the roller outer, tread-engaging surface, which may comprise an annular or circumferential surface of the roller to allow the roller to translate in an axial direction of the roller and across a surface of the tread, such as an outer, exposed surface of the tread. This facilitates easier arrangement of the roller relative the tread, including improved insertion of the roller into a fold arranged along the tread, which may be formed prior to insertion of the roller. It is understood each bearing may comprise any bearing, such as a roller bearing configured to rotate at least in an axial direction of the roller and transverse to the demolding path, and in a circumferential direction of the roller and in the direction of the demolding path. It is understood that the roller may be inserted into an operable position along the demolding path, and along the tread, in either a manual or automatic manner.

With specific regard to FIG. **6**, a tread **10** is shown being demolded from a mold **20** using device **30.** As shown, a first end of the tread **12** is being directed away from the first end **26** of the molding cavity **22** and towards the second end of the tread **14** and the second end of the molding cavity presently remaining in the molding cavity prior to removal.

It is understood, as discussed above, the demolding path may continue in any direction after reaching the perpendicular position. For example, in particular embodiments, such as is shown in FIG. **2**, the tread **10** is directed away from the first end **12** of the tread molding cavity **22** by an angle **β** greater than 180 degrees relative the molded position within the tread molding cavity to form a fold **19** in the tread outward the molding cavity. In doing so, the fold **19** is formed at the perpendicular position along the demolding path. By further example, with reference to FIG. **7**, the tread **10** is translated 180 degrees away from the molding position subsequent to reaching the perpendicular position **18**, while in an alternative demolding path shown in broken lines, the demolding path continues from the perpendicular position at an angle **β** greater than 180 degrees.

As stated above, a plurality of rollers may be arranged to generally replicate a portion of a demolding path defined by a single roller. With reference to FIG. **7**, for example, a plurality of rollers are shown arranged at different locations from the molding cavity to define a demolding path for the tread. While any arrangement of rollers may be employed to define a demolding path as described above, in the embodiment shown, a first roller **32a** is arranged in close proximity to the mold in similar fashion to the roller discussed in association with the embodiments shown in FIGS. **2-6****.** Furthermore, a second roller **32b** is arranged a further distance from the mold along the demolding path to further define the demolding path. In the embodiment shown, the second roller **32b** is shown in the perpendicular position located a distance **D** from the tread molded position within the molding cavity. The portion of the demolding path defined by the first and second rollers extends at an initial angle **β** from the molded position of the demolded portion of the tread prior to reaching the perpendicular position **18**, the initial angle being less than 90 degrees. Upon reaching the perpendicular position **18** along the demolding path, the tread may continue in the same perpendicular direction along a demolding path as exemplarily shown, or may continue bending the tread, such as to form a fold in the tread, as exemplarily shown in broken lines, with the addition of one or more additional rollers, such as a third roller **32c.** In forming a fold **19**, a demolded portion of the tread **10** is directed overtop a portion of the tread remaining within the mold yet to be demolded (that is, portions of the tread still arranged in a molded position). In effect, a plurality of rollers may be employed to form a bend or fold in the tread that may otherwise be defined by a single roller.

In testing the invention, and in particular, comparing the performance of the prior art embodiment of FIG. **1** (no roller) against the inventive embodiment shown in FIG. **2** in demolding a 25 mm thick folded tread, the embodiment of FIG. **2** (using a 63 mm diameter roller) reduced tread crack initiation by 50% while reducing crack severity by approximately 80%, where crack severity was based upon the length of the crack. Improvements in crack reduction (crack initiation and severity) were also observed when using 1 inch (25 mm), 2 inch (50 mm), and 3 inch (76 mm) diameter rollers. For instance, a 65% improvement in crack severity was observed when employing the 1 inch diameter roller, which increased to a 99% improvement when employing a 3 inch diameter roller, as compared to demolding the same tread without the use of any roller (per FIG. 1) arranged between the tread fold. A reduction in demolding force was also observed in testing the rollers, and noted above.

While this invention has been described with reference to particular embodiments thereof, it shall be understood that such description is by way of illustration and not by way of limitation. Accordingly, the scope and content of the invention are to be defined by the terms of the appended claims.

## Claims

1. A method of demolding a tread (10) from a mold (20), the method comprising:
arranging one or more rollers (32) to extend across a transverse extent of a tread molding cavity (22) and across an outer, exposed side (15a) of a tread (10), the tread (10) being at least partially arranged in a tread molding cavity (22) of a mold (20), the tread molding cavity (22) having a length extending longitudinally from a first end (26) to a second end (28) and including projections (24) for forming void features (16) in a thickness of the tread (10), where each of the one or more-rollers (32) is freely-rotatable and arranged to define a demolding path of the tread (10) extending from the mold (20);
demolding a first end (12) of the tread (10) from the mold (20), whereby a remaining portion of the tread (10) remains within the tread molding cavity (22);
arranging the tread (10) at least partially around the one or more rollers (32); and
demolding the remaining portion of the tread (10) from the tread molding cavity (22) along the demolding path such that the tread (10) is initially directed outwardly from a molded position within the tread molding cavity (22) at an initial angle (β) less than 90 degrees from the molded position, the tread (10) continuing along the demolding path until the tread (10) is directed away from the molding cavity (22) in a direction 90 degrees from the molded position at a perpendicular position (18), the perpendicular position (18) located a distance (D) away from the molding cavity (22), the distance (D) being at least equal to approximately 80% of the tread thickness, and where the tread (10) at least partially extends around a circumference of at least one of the one or more rollers (32) along the demolding path, where the step of demolding includes translating, in a longitudinal direction, one of the mold (20) or the tread (10) relative the other to demold the tread (10) from the mold cavity (22).

2. The method recited in claim 1, where the step of demolding the first end (12) of the tread (10) from the tread molding cavity (22) is performed automatically using an automatic demolding device (50), and where the step of arranging one or more rollers (32) to extend across a transverse extent of the tread molding cavity (22) and across an outer, exposed side (15a) of the tread (10) is performed while the tread (10) remains engaged with the automatic demolding device (50) and occurs prior to performing the step of demolding the first end (12) of the tread (10) from the mold (20).

3. The method recited in claim 2, where the step of arranging one or more rollers (32) to extend across a transverse extent of the tread molding cavity (22) and across an outer, exposed side (15a) of the tread (10) occurs after performing the step of demolding the first end (12) of the tread (10) from the mold (20).

4. The method recited in claim 1, where the step of arranging the tread (10) at least partially around the one or more rollers (32) occurs concurrently with and by virtue of performing the step of arranging one or more rollers (32) to extend across a transverse extent; and
where the steps of arranging the tread (10) at least partially around the one or more rollers (32) and arranging one or more rollers (32) to extend across a transverse extent of the tread molding cavity (22) are each performed by operably moving each of the one or more rollers (32) from a tread-receiving position to a demolding position after performing the step of demolding the first end (12) of the tread (10).

5. The method recited in claim 1, where the distance (D) is equal to or greater than 20 millimeters.

6. The method recited in claim 1, where the step of arranging includes arranging each of the one or more rollers (32) in close proximity to the tread molding cavity (22) and forms a spacing (5) between each of the one or more rollers (32) and the tread molding cavity (22), the spacing (5) being at least equal to 1 millimeter and not greater than 10 millimeters.

7. The method recited in claim 1, where the step of demolding the remaining portion of the tread (10) includes directing the first end (12) of the tread (10) away from the first end (26) of the tread molding cavity (22) by an angle (β) greater than 180 degrees relative the molded position within the tread molding cavity (22) to form a fold in the tread (10) outward the molding cavity of the tread (10) after the tread (10) continues along the demolding path from the perpendicular position (18).

8. The method recited in claim 1 further comprising the step of:
maintaining the tread (10) in close relation to the at least one of the one or more rollers (32) during the step of demolding the remaining portion of the tread (10) to generally maintain the tread (10) along the demolding path during the step of demolding.

9. The method recited in claim 8, where the step of maintaining includes maintaining at least the lateral sides of the tread (10) in close relation to the at least one of the one or more rollers (32), the lateral sides being arranged on opposing sides of a tread (10) width.

10. The method recited in claim 1, further comprising the step of:
maintaining the tread (10) in close relation to the at least one of the one or more rollers (32) during the step of demolding the remaining portion of the tread (10) to generally maintain the tread (10) along the demolding path during the step of demolding, where the step of maintaining is achieved by arranging one or more rotatable guide members (44) along each lateral side of the tread width, wherein the one or more rotatable guide members (44) are spaced apart from the at least one of the one or more rollers (32) to provide a space through which the tread (10) extending along the demolding path passes.

11. An apparatus (50) to assist in the demolding of a tread (10), the apparatus (50) comprising:
a tread mold (20); and
a freely translating demolding-assistance device (30) configured to freely translate along the tread mold (20), the device (30) including one or more rollers (32) extending across a tread-receiving area (31) within the device (30)
**characterized in that**
the one or more rollers (32) are each freely-rotatable and form a portion of a demolding path of the tread (10) where the tread (10) extends at least partially around the one or more rollers (32), the tread-receiving area (31) configured to receive a width of the tread (10) arranged in a tread molding cavity (22) of the tread mold (20), the tread-receiving area (31) also is configured to extend across a transverse extent of the tread molding cavity (22) and across an outer, exposed side (15a) of the tread (10), where the device (30) is configured to demold the tread (10) from the tread molding cavity (22) along the demolding path such that the tread (10) is initially directed outwardly from a molded position within the tread molding cavity (22) at an initial angle (β) less than 90 degrees from the molded position, the tread (10) continuing along the demolding path until the tread (10) is directed away from the molding cavity (22) in a direction 90 degrees from the molded position at a perpendicular position (18), the perpendicular position (18) located a distance (D) away from the molding cavity (22), the distance (D) being at least equal to approximately 80% of the tread thickness.

12. The apparatus (50) recited in claim 11, where the device (30) includes a frame (34) to which the roller (32) is operably attached, the frame (34) including one or more translation members (36) attached to the frame (34) to facilitate translation of the device (30) along a length of the tread molding cavity (22).

13. The apparatus (50) recited in claim 12, where each of the one or more translation members (36) comprise a rotatable member operably attached to the frame (34) to facilitate constrained translation of the device (30) along the length of the tread molding cavity (22).

14. The apparatus (50) recited in claim 13 further comprising:
one or more guide members (44) spaced apart from the roller (32) to provide a space through which a tread (10) extending along a demolding path passes, the one or more guide members (44) being a rotatable member and operably attached to the frame (34); and
where each of the one or more translation members (36) are arranged in operable engagement with a guide rail (38) extending in a lengthwise direction of the mold (20).

15. The apparatus (50) recited in claim 14, where each of the one or more guide members (44) is a rotatable member.

## Patentansprüche

1. Verfahren zum Entformen einer Lauffläche (10) aus einer Form (20), wobei das Verfahren umfasst:
Anordnen von einer oder mehreren Rollen (32), sodass sie sich über eine Querausdehnung eines Profilformhohlraums (22) und über eine äußere, freiliegende Seite (15a) einer Lauffläche (10) erstrecken, wobei die Lauffläche (10) zumindest teilweise in einem Profilformhohlraum (22) einer Form (20) angeordnet ist, der Laufflächenformhohlraum (22) eine Länge aufweist, die sich in Längsrichtung von einem ersten Ende (26) bis zu einem zweiten Ende (28) erstreckt und Vorsprünge (24) zum Bilden von Hohlraummerkmalen (16) in einer Dicke der Lauffläche (10) aufweist, wobei jede der einen oder mehreren Rollen (32) frei drehbar und dafür ausgelegt ist, einen Entformungsweg der Lauffläche (10) zu definieren, der sich von der Form (20) aus erstreckt;
Entformen eines ersten Endes (12) der Lauffläche (10) aus der Form (20), wobei ein verbleibender Abschnitt der Lauffläche (10) innerhalb des Laufflächenformhohlraums (22) bleibt;
Anordnen der Lauffläche (10) zumindest teilweise um die eine oder mehreren Rollen (32) herum; und
Entformen des verbleibenden Abschnitts der Lauffläche (10) aus dem Laufflächenformhohlraum (22) entlang des Entformungsweges derart, dass die Lauffläche (10) zunächst aus einer geformten Position innerhalb des Laufflächenformhohlraums (22) in einem Anfangswinkel (β) von weniger als 90 Grad von der geformten Position nach außen gerichtet ist, wobei die Lauffläche (10) entlang des Entformungsweges weiterläuft, bis die Lauffläche (10) von dem Formhohlraum (22) in eine Richtung 90 Grad von der geformten Position an einer senkrechten Position (18) weggerichtet ist, wobei sich die senkrechte Position (18) in einem Abstand (D) vom Formhohlraum (22) befindet, wobei der Abstand (D) mindestens gleich etwa 80 % der Laufflächendicke ist, und wobei sich die Lauffläche (10) zumindest teilweise um einen Umfang von mindestens einer der einen oder mehreren Rollen (32) entlang des Entformungsweges erstreckt, wobei der Entformungsschritt das Verschieben einer der Formen (20) oder der Lauffläche (10) in Längsrichtung relativ zur anderen beinhaltet, um die Lauffläche (10) aus dem Formhohlraum (22) zu entformen.

2. Verfahren nach Anspruch 1, wobei der Schritt des Entformens des ersten Endes (12) der Lauffläche (10) aus dem Laufflächenformhohlraum (22) automatisch unter Verwendung einer automatischen Entformungsvorrichtung (50) durchgeführt wird, und wobei der Schritt des Anordnens von einer oder mehreren Rollen (32), damit sie sich über eine Querausdehnung des Laufflächenformhohlraums (22) und über eine äußere, freiliegende Seite (15a) der Lauffläche (10) erstrecken, ausgeführt wird, während die Lauffläche (10) mit der automatischen Entformungsvorrichtung (50) in Eingriff bleibt, und erfolgt vor dem Ausführen des Entformungsschrittes des ersten Endes (12) der Lauffläche (10) aus der Form (20).

3. Verfahren nach Anspruch 2, wobei der Schritt des Anordnens von einer oder mehreren Rollen (32), die sich über eine Querausdehnung des Laufflächenformhohlraums (22) und über eine äußere, freiliegende Seite (15a) der Lauffläche (10) erstrecken, nach Durchführung des Entformungsschrittes des ersten Endes (12) der Lauffläche (10) aus der Form (20) erfolgt.

4. Verfahren nach Anspruch 1, wobei der Schritt des Anordnens der Lauffläche (10) zumindest teilweise um die eine oder um mehrere Rollen (32) herum gleichzeitig mit und durch Ausführen des Schrittes des Anordnens einer oder mehrerer Rollen (32) erfolgt, sodass sie sich über eine Querausdehnung erstrecken; und
wobei die Schritte des Anordnens der Lauffläche (10) zumindest teilweise um die eine oder die mehreren Rollen (32) herum und des Anordnens von einer oder mehreren Rollen (32), sodass sie sich über eine Querausdehnung des Laufflächenformhohlraums (22) erstrecken, jeweils durchgeführt werden, indem jede der einen oder mehreren Rollen (32) aus einer Laufflächenaufnahmeposition in eine Entformungsposition bewegt wird, nachdem der Schritt des Entformens des ersten Endes (12) der Lauffläche (10) ausgeführt wurde.

5. Verfahren nach Anspruch 1, wobei der Abstand (D) größer oder gleich 20 Millimeter ist.

6. Verfahren nach Anspruch 1, wobei der Schritt des Anordnens das Anordnen jeder der einen oder mehreren Rollen (32) in unmittelbarer Nähe des Laufflächenformhohlraums (22) umfasst und einen Abstand (5) zwischen jeder der einen oder mehreren Rollen (32) und dem Laufflächenformhohlraum (22) bildet, wobei der Abstand (5) mindestens gleich 1 Millimeter und nicht größer als 10 Millimeter ist.

7. Verfahren nach Anspruch 1, wobei der Schritt des Entformens des verbleibenden Abschnitts der Lauffläche (10) das Richten des ersten Endes (12) der Lauffläche (10) weg vom ersten Ende (26) des Laufflächenformhohlraums (22) um einen Winkel (β) von mehr als 180 Grad relativ zur geformten Position innerhalb des Laufflächenformhohlraums (22) umfasst, um eine Falte in der Lauffläche (10) außerhalb des Formhohlraums der Lauffläche (10) zu bilden, nachdem die Lauffläche (10) aus der senkrechten Position (18) entlang des Entformungsweges fortgesetzt wurde.

8. Verfahren nach Anspruch 1, das ferner den folgenden Schritt umfasst:
Halten der Lauffläche (10) in enger Beziehung zu der mindestens einen der einen oder mehreren Rollen (32) während des Schrittes des Entformens des verbleibenden Abschnitts der Lauffläche (10), um die Lauffläche (10) während des Entformungsschrittes im Allgemeinen entlang des Entformungsweges zu halten.

9. Verfahren nach Anspruch 8, wobei der Schritt des Haltens das Halten mindestens der Seitenflächen der Lauffläche (10) in enger Beziehung zu der mindestens einen der einen oder mehreren Rollen (32) umfasst, wobei die Seitenflächen auf gegenüberliegenden Seiten einer Breite der Lauffläche (10) angeordnet sind.

10. Verfahren nach Anspruch 1, ferner den folgenden Schritt umfassend:
Halten der Lauffläche (10) in enger Beziehung zu der mindestens einen der einen oder mehreren Rollen (32) während des Schrittes des Entformens des verbleibenden Abschnitts der Lauffläche (10), um die Lauffläche (10) während des Entformungsschrittes im Allgemeinen entlang des Entformungsweges zu halten, wobei der Schritt des Haltens durch Anordnen von einem oder mehreren drehbaren Führungselementen (44) entlang jeder lateralen Fläche der Laufflächenbreite erreicht wird, wobei das eine oder die mehreren drehbaren Führungselemente (44) von der mindestens einen der einen oder mehreren Rollen (32) mit Abstand angeordnet sind, um einen Raum bereitzustellen, durch den die Lauffläche (10), die sich entlang des Entformungsweges erstreckt, verläuft.

11. Vorrichtung (50) zur Unterstützung bei der Entformung einer Lauffläche (10), wobei die Vorrichtung (50) umfasst:
eine Laufflächenform (20); und
eine frei bewegliche Entformungshilfsvorrichtung (30), die dafür ausgelegt ist, sich entlang der Laufflächenform (20) frei zu verschieben, wobei die Vorrichtung (30) eine oder mehrere Rollen (32) aufweist, die sich über einen Laufflächenaufnahmebereich (31) innerhalb der Vorrichtung (30) erstrecken,
**dadurch gekennzeichnet, dass**
die eine oder mehreren Rollen (32) jeweils frei drehbar sind und einen Abschnitt eines Entformungsweges der Lauffläche (10) bilden, wobei sich die Lauffläche (10) zumindest teilweise um die eine oder die mehreren Rollen (32) erstreckt, der Laufflächenaufnahmebereich (31) dafür ausgelegt ist, eine Breite der Lauffläche (10) aufzunehmen, die in einem Laufflächenformhohlraum (22) der Laufflächenform (20) angeordnet ist, wobei der Laufflächenaufnahmebereich (31) auch dafür ausgelegt ist, sich über eine Querausdehnung des Laufflächenformhohlraums (22) und über eine äußere, freiliegende Seite (15a) der Lauffläche (10) zu erstrecken, wobei die Vorrichtung (30) dafür ausgelegt ist, die Lauffläche (10) aus dem Laufflächenformhohlraum (22) entlang des Entformungsweges so zu entformen, dass die Lauffläche (10) zunächst aus einer geformten Position innerhalb des Laufflächenformhohlraums (22) in einem Anfangswinkel (β) von weniger als 90 Grad aus der geformten Position nach außen gerichtet ist, die Lauffläche (10) entlang des Entformungsweges weitergeht, bis die Lauffläche (10) in einer Richtung 90 Grad von der geformten Position in einer senkrechten Position (18) weg vom Formhohlraum (22) gerichtet ist, wobei sich die senkrechte Position (18) in einem Abstand (D) vom Formhohlraum (22) entfernt angeordnet ist und wobei der Abstand (D) mindestens gleich etwa 80 % der Laufflächendicke ist.

12. Vorrichtung (50) nach Anspruch 11, wobei die Vorrichtung (30) einen Rahmen (34) beinhaltet, an dem die Rolle (32) funktionsfähig befestigt ist, wobei der Rahmen (34) ein oder mehrere Translationselemente (36) beinhaltet, die an dem Rahmen (34) befestigt sind, um die Translation der Vorrichtung (30) entlang einer Länge des Laufflächenformhohlraums (22) zu erleichtern.

13. Vorrichtung (50) nach Anspruch 12, wobei jedes der einen oder mehreren Translationselemente (36) ein drehbares Element umfasst, das funktionsfähig am Rahmen (34) befestigt ist, um eine eingeschränkte Verschiebung der Vorrichtung (30) entlang der Länge des Laufflächenformhohlraums (22) zu erleichtern.

14. Vorrichtung (50) nach Anspruch 13, ferner umfassend:
ein oder mehrere Führungselemente (44), die mit Abstand von der Rolle (32) angeordnet sind, um einen Raum bereitzustellen, durch den eine Lauffläche (10), die sich entlang eines Entformungsweges erstreckt, verläuft, wobei das eine oder die mehreren Führungselemente (44) ein drehbares Element sind und funktionsfähig mit dem Rahmen (34) verbunden sind; und
wobei jedes der einen oder mehreren Translationselemente (36) in betriebsbereitem Eingriff mit einer Führungsschiene (38) angeordnet ist, die sich in Längsrichtung der Form (20) erstreckt.

15. Vorrichtung (50) nach Anspruch 14, wobei jedes der einen oder mehreren Führungselemente (44) ein drehbares Element ist.

## Revendications

1. Procédé de démoulage d'une bande de roulement (10) depuis un moule (20), le procédé comprenant :
d'agencer un ou plusieurs rouleaux (32) pour s'étendre sur une étendue transversale d'une cavité de moulage de bande de roulement (22) et sur un côté extérieur opposé (15a) d'une bande de roulement (10), la bande de roulement (10) étant au moins en partie agencée dans une cavité de moulage de bande de roulement (22) d'un moule (20), la cavité de moulage de bande de roulement (22) ayant une longueur s'étendant longitudinalement depuis une première extrémité (26) jusqu'à une seconde extrémité (28) et incluant des saillies (24) pour former des éléments de vide (16) dans une épaisseur de la bande de roulement (10), dans lequel chacun des un ou plusieurs rouleaux (32) est libre en rotation et agencé pour définir un trajet de démoulage de la bande de roulement (10) s'étendant depuis le moule (20) ;
de démouler une première extrémité (12) de la bande de roulement (10) depuis le moule (20), moyennant quoi une partie restante de la bande de roulement (10) reste dans la cavité de moulage de bande de roulement (22) ;
d'agencer la bande de roulement (10) au moins en partie autour des un ou plusieurs rouleaux (32) ; et
de démouler la partie restante de la bande de roulement (10) depuis la cavité de moulage de bande de roulement (22) le long du trajet de démoulage de telle manière que la bande de roulement (10) est initialement dirigée vers l'extérieur depuis une position moulée dans la cavité de moulage de bande de roulement (22) à un angle (β) initial inférieur à 90 degrés depuis la position moulée, la bande de roulement (10) continuant le long du trajet de démoulage jusqu'à ce que la bande de roulement (10) soit dirigée à l'opposé de la cavité de moulage (22) dans une direction à 90 degrés de la position moulée dans une position perpendiculaire (18), la position perpendiculaire (18) située à une distance (D) de la cavité de moulage (22), la distance (D) étant au moins égale à approximativement 80% de l'épaisseur de bande de roulement, et dans lequel la bande de roulement (10) s'étend au moins en partie autour d'une circonférence d'au moins un des un ou plusieurs rouleaux (32) le long du trajet de démoulage, dans lequel l'étape de démoulage inclut de translater, dans une direction longitudinale, l'un du moule (20) ou de la bande de roulement (10) relativement à l'autre pour démouler la bande de roulement (10) de la cavité de moulage (22).

2. Procédé selon la revendication 1, dans lequel l'étape de démoulage de la première extrémité (12) de la bande de roulement (10) de la cavité de moulage de bande de roulement (22) est réalisée automatiquement en utilisant un dispositif de démoulage automatique (50), et dans lequel l'étape d'agencement d'un ou plusieurs rouleaux (32) pour s'étendre sur une étendue transversale de la cavité de moulage de bande de roulement (22) et sur un côté extérieur opposé (15a) de la bande de roulement (10) est réalisée alors que la bande de roulement (10) reste en prise avec le dispositif de démoulage automatique (50) et a lieu avant de réaliser l'étape de démoulage de la première extrémité (12) de la bande de roulement (10) du moule (20).

3. Procédé selon la revendication 2, dans lequel l'étape d'agencement d'un ou plusieurs rouleaux (32) pour s'étendre sur une étendue transversale de la cavité de moulage de bande de roulement (22) et sur un côté extérieur opposé (15a) de la bande de roulement (10) a lieu après la réalisation de l'étape de démoulage de la première extrémité (12) de la bande de roulement (10) du moule (20).

4. Procédé selon la revendication 1, dans lequel l'étape d'agencement de la bande de roulement (10) au moins en partie autour des un ou plusieurs rouleaux (32) a lieu concurremment avec et grâce à la réalisation de l'étape d'agencement d'un ou plusieurs rouleaux (32) pour s'étendre sur une étendue transversale ; et
dans lequel les étapes d'agencement de la bande de roulement (10) au moins en partie autour des un ou plusieurs rouleaux (32) et d'agencement d'un ou plusieurs rouleaux (32) pour s'étendre sur une étendue transversale de la cavité de moulage de bande de roulement (22) sont chacune réalisées en déplaçant opérationnellement chacun des un ou plusieurs rouleaux (32) d'une position de réception de bande de roulement vers une position de démoulage après la réalisation de l'étape de démoulage de la première extrémité (12) de la bande de roulement (10).

5. Procédé selon la revendication 1, dans lequel la distance (D) est supérieure ou égale à 20 millimètres.

6. Procédé selon la revendication 1, dans lequel l'étape d'agencement inclut d'agencer chacun des un ou plusieurs rouleaux (32) à proximité étroite de la cavité de moulage de bande de roulement (22) et forme un espace (5) entre chacun des un ou plusieurs rouleaux (32) et la cavité de moulage de bande de roulement (22), l'espace (5) étant au moins égal à 1 millimètre et pas supérieur à 10 millimètres.

7. Procédé selon la revendication 1, dans lequel l'étape de démoulage de la partie restante de la bande de roulement (10) inclut de diriger la première extrémité (12) de la bande de roulement (10) à l'opposé de la première extrémité (26) de la cavité de moulage de bande de roulement (22) d'un angle (β) supérieur à 180 degrés relativement à la position moulée dans la cavité de moulage de bande de roulement (22) pour former un pli dans la bande de roulement (10) à l'extérieur de la cavité de moulage de la bande de roulement (10) après que la bande de roulement (10) continue le long du trajet de démoulage depuis la position perpendiculaire (18).

8. Procédé selon la revendication 1 comprenant en outre l'étape de :
maintien de la bande de roulement (10) en relation étroite à l'au moins un des un ou plusieurs rouleaux (32) pendant l'étape de démoulage de la partie restante de la bande de roulement (10) pour maintenir globalement la bande de roulement (10) le long du trajet de démoulage pendant l'étape de démoulage.

9. Procédé selon la revendication 8, dans lequel l'étape de maintien inclut de maintenir au moins les côtés latéraux de la bande de roulement (10) en relation étroite avec l'au moins un des un ou plusieurs rouleaux (32), les côté latéraux étant agencés sur des côtés opposés d'une largeur de bande de roulement (10).

10. Procédé selon la revendication 1, comprenant en outre l'étape de :
maintien de la bande de roulement (10) en relation étroite avec l'au moins un des un ou plusieurs rouleaux (32) pendant l'étape de démoulage de la partie restante de la bande de roulement (10) pour maintenir globalement la bande de roulement (10) le long du trajet de démoulage pendant l'étape de démoulage, dans lequel l'étape de maintien est obtenue en agençant un ou plusieurs éléments de guidage (44) le long de chaque côté latéral de la largeur de bande de roulement, dans lequel les un ou plusieurs éléments de guidage (44) sont espacés de l'au moins un des un ou plusieurs rouleaux (32) pour fournir un espace à travers lequel la bande de roulement (10) s'étendant le long du trajet de démoulage passe.

11. Dispositif (50) pour aider au démoulage d'une bande de roulement (10), le dispositif (50) comprenant un moule (20) de bande de roulement ; et
un dispositif d'aide au démoulage (30) translatant librement configuré pour translater librement le long du moule (20) de bande de roulement, le dispositif (30) incluant un ou plusieurs rouleaux (32) s'étendant sur une aire de réception de bande de roulement (31) dans le dispositif (30)
**caractérisé en ce que**
les un ou plusieurs rouleaux (32) sont chacun libres en rotation et forment une partie d'un trajet de démoulage de la bande de roulement (10) dans lequel la bande de roulement (10) s'étend au moins en partie autour des un ou plusieurs rouleaux (32), l'aire de réception de bande de roulement (31) étant configurée pour recevoir une largeur de la bande de roulement (10) agencée dans une cavité de moulage de bande de roulement (22) du moule (20) de bande de roulement, l'aire de réception de bande de roulement (31) est aussi configurée pour s'étendre sur une étendue transversale de la cavité de moulage de bande de roulement (22) et sur un côté extérieur opposé (15a) de la bande de roulement (10), dans lequel le dispositif (30) est configuré pour démouler la bande de roulement (10) de la cavité de moulage de bande de roulement (22) le long du trajet de démoulage de telle manière que la bande de roulement (10) est initialement dirigée vers l'extérieur depuis une position moulée dans la cavité de moulage de bande de roulement (22) à un angle (β) initial inférieur à 90 degrés depuis la position moulée, la bande de roulement (10) continuant le long du trajet de démoulage jusqu'à ce que la bande de roulement (10) soit dirigée à l'opposé de la cavité de moulage (22) dans une direction à 90 degrés de la position moulée dans une position perpendiculaire (18), la position perpendiculaire (18) située à une distance (D) de la cavité de moulage (22), la distance (D) étant au moins égale à approximativement 80% de l'épaisseur de bande de roulement.

12. Dispositif (50) selon la revendication 11, dans lequel le dispositif (30) inclut un cadre (34) sur lequel le rouleau (32) est fixé de manière opérationnelle, le cadre (34) incluant un ou plusieurs éléments de translation (36) fixés sur le cadre (34) pour faciliter la translation du dispositif (30) sur une longueur de la cavité de moulage de bande de roulement (22).

13. Dispositif (50) selon la revendication 12, dans lequel chacun des un ou plusieurs éléments de translation (36) comprend un élément tournant fixé de manière opérationnelle au cadre (34) pour faciliter une translation forcée du dispositif (30) sur la longueur de la cavité de moulage de bande de roulement (22).

14. Dispositif (50) selon la revendication 13, comprenant en outre :
un ou plusieurs éléments de guidage (44) espacés du rouleau (32) pour fournir un espace à travers lequel une bande de roulement (10) s'étendant le long d'un trajet de démoulage passe, les un ou plusieurs éléments de guidage (44) étant un élément tournant et fixé opérationnellement au cadre (34) ; et
dans lequel chacun des un ou plusieurs éléments de translation (36) sont agencés en prise opérationnelle avec un rail de guidage (38) s'étendant dans une direction de longueur du moule (20).

15. Dispositif (50) selon la revendication 14, dans lequel chacun des un ou plusieurs éléments de guidage (44) est un élément tournant.
